# EUROPEAN PATENT SPECIFICATION

(11) **EP 0 554 091 B1**
(45) Date of publication and mention of the grant of the patent: **20.05.1998**
(21) Application number: 93300637.1
(22) Date of filing: 28.01.1993
(51) Int. Cl.: G02F 1/1339, G02F 1/1335

(54) **Colour liquid crystal electro-optical device and method of manufacturing the same**
Elektrooptische Farbflüssigkristallanordnung und deren Herstellungsverfahren
Dispositif électrooptique à cristal liquide en couleur et procédé pour sa fabrication

(30) Priority: 29.01.1992 JP 14261/92
(43) Date of publication of application: 04.08.1993
(73) Proprietor: SEIKO INSTRUMENTS INC., Tokyo 136 (JP)
(72) Inventor: Fukuchi, Takakazu, c/o Seiko Instruments Inc., Tokyo (JP)
(74) Representative: Sturt, Clifford Mark

(56) References cited:
- PATENT ABSTRACTS OF JAPAN vol. 15, no. 153 (P-1191) 17 April 1991 & JP-A-03 024 523 ( OPTREX CORP. ) 01 February 1991
- PATENT ABSTRACTS OF JAPAN vol. 15, no. 487 (P-1286) 10 December 1991 & JP-A-03 211 524 ( HITACHI ) 17 September 1991
- PATENT ABSTRACTS OF JAPAN vol. 14, no. 468 (P-1115) 12 October 1990 & JP-A-02 187 724 ( MATSUSHITA ) 23 July 1990

## Description

The present invention relates to a colour liquid crystal electro-optical device used for personal computers and pocket television. Such devices are known from JP-A-2-187 724 and the corresponding Japanese Patent Abstract.

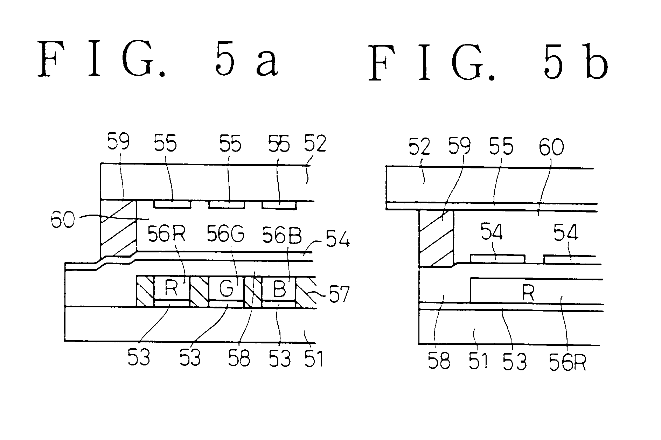

Referring to Fig. 5, colour liquid crystal electro-optical devices are explained. Fig. 5 is a sectional view of a conventional colour liquid crystal electro-optical device. Fig. 5 (a) and (b) are the sectional views shown from two angles rotated at an angle of 90° respectively to each other. The structure of this colour liquid crystal electro-optical device is as follows.

A transparent electrode 53 which has been patterned previously is disposed on the surface of the glass substrate 51. Colour filters 56R, 56G, 56B are provided in order over and on the patterned transparent electrodes 53. A black matrix 57 is provided in the gaps between these colour filters. An overcoat layer 58 is provided on the colour filters and the black matrix. A patterned transparent electrode 54 is provided again on the surface of the overcoat layer.

A patterned transparent electrode 55 is then provided on the surface of a transparent substrate 52. The transparent substrate 52 faces the colour filter substrate 51 and adhere to each other with a sealing material 59. The structure leaves a space to enclose liquid crystal 60 between the two substrates.

The basic structure of a liquid crystal cell of a colour liquid crystal electro-optical device has now been explained. In addition, the colour liquid crystal electro-optical device further comprises: polarizing plates being stuck to each exterior side of said colour filter substrate and the transparent substrate, a power supply unit to drive the liquid crystal, a controller unit and a backlight unit.

The aforementioned transparent electrode pattern 53 is provided under the colour filter 56R, 56G and 56B of said colour filter substrate. Said electrode pattern 53 is required when the colour filters are formed by the colour filter manufacturing methods, high polymer electro-deposition method or by micell electrolytic method. When the colour filters are made by dyeing, printing or pigment distribution, said transparent electrode pattern 53 is unnecessary and is not provided.

Recently, the STN (Super Twisted Nomatic) mode having excellent electro-optical properties is often applied to a liquid crystal cell of the colour liquid crystal electro-optical device. In particular, the majority of colour liquid crystal electro-optical devices having the STN mode is used for personal computers because of its large size and high resolution.

One of the most important requirements for the STN mode liquid crystal cell is the uniformity of the cell gap.

The cell gap is the thickness of liquid crystal 60 sealed between the substrates as shown in Fig. 5. The cell gap between colour filter substrate 51 and the opposing substrate 52 is carefully controlled by the sealing material 59 and a spherical fine powder called a gap control material.

Any variation in the cell gap must be less than ±0.1 µm. If the variation in the cell gap is greater than ±0.1 µm, this non-uniformity of the colour liquid crystal electro-optical device usually causes deterioration of visible properties and results in problems such as irregular tone and low contrast.

Generally, each transparent electrode 53, 54 and 55 provided in the liquid crystal cell of the colour liquid crystal electro-optical device, as shown in Fig. 5, has a film thickness ranging from 0.10 µm to 0.30 µm. Because of lowering the value of its resistance the film thickness of transparent electrodes 54 and 55, tend to become thicker, such that the film thickness is over 0.2 µm at present.

However, in the structure of the conventional liquid crystal cell, at the sealing portion where the sealing material 59 is provided which is important to control the cell gap the patterned transparent electrodes 53, 54 and 55 are also provided, but not throughout the sealing portion. This causes a serious defect in the uniformity of the cell gap.

Accordingly, it is an object of the present invention to provide a colour liquid crystal electrooptical device having a uniformly controlled cell gap and so obtain good contrast and good picture quality.

This invention provides a colour electrooptical device as defined in claim 1 and a method of manufacturing as defined in claim 3.

The above and further objects and novel features of the present invention will more fully appear from the following detailed description when the same is read in connection with the accompanying drawings. It is to be expressly understood, however, that the drawings are for the purpose of illustration only and are not intended as a definition of the limits of the present invention.

Embodiments of the present invention will now be described with reference to the following drawings, of which:
Figs. 1a and 1b are sectional views of an embodiment of the inventive colour liquid crystal display device from two different angles;
Fig. 2 is a plan view of another embodiment of the present invention wherein the glass substrate provides the transparent electrode pattern to prepare the colour filter by high polymer electro-deposition;
Fig. 3 is a plan view showing another embodiment of the present invention wherein the colour filter substrate includes the transparent electrode pattern provided on the colour filter substrate;
Fig. 4 is a plan view showing one of the embodiments of the opposing glass substrate which includes the transparent electrode pattern;
Figs. 5a and 5b are sectional views showing a liquid crystal cell of the colour liquid crystal display type from two different angles;
Fig. 6a is a plan view showing another embodiment of the present invention wherein the colour filter substrate has the transparent electrode pattern provided on the colour filter substrate; and
Fig. 6b is a plan view showing another embodiment wherein the opposing glass substrate has the transparent electrode pattern.

### (Embodiment 1)

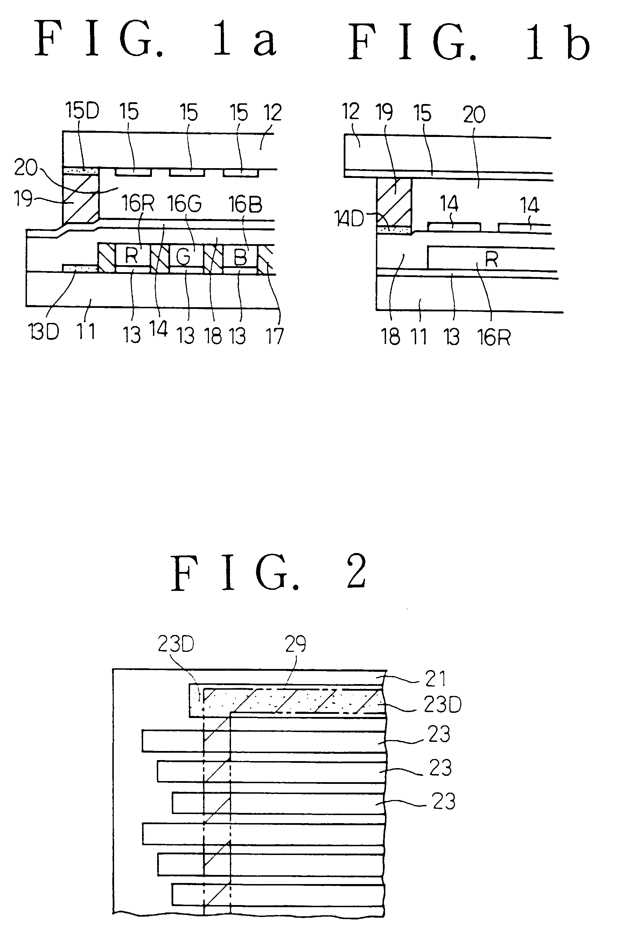

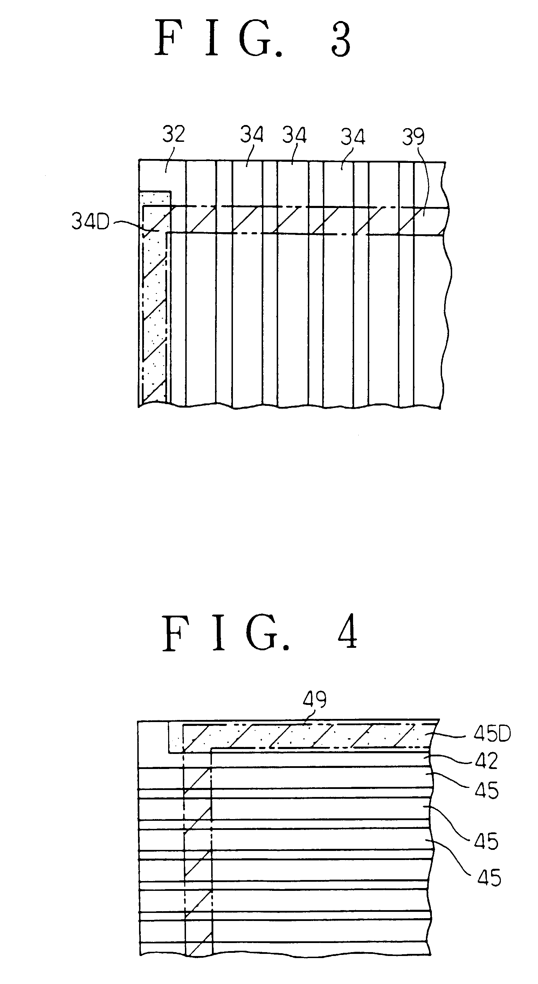

Fig. 1 is a sectional view of the liquid crystal cell in a colour liquid crystal display device according to the present invention. Figs. 1a and 1b are the partial cross sections shown from two angles rotated by an angle of 90° respectively. Fig. 2 shows a colour filter glass substrate employed in the high polymer electro-deposition method, where a transparent electrode is patterned. Fig. 3 shows a patterned transparent electrode which is provided on a colour filter and a covercoat layer formed on the colour filter glass substrate. Fig. 4 shows the transparent electrode pattern which is formed on the glass substrate facing the colour filter substrate. Figs. 2, 3 and 4, are each plane overviews.

Three kinds of transparent electrode patterns are shown in Fig. 2, 3 and 4 and are the feature of the present invention. In Fig. 2, reference 23 is the transparent electrode pattern for forming the colour filter. However the colour filter is not formed on the transparent electrode pattern 23D. 23D corresponds to the transparent electrode pattern 13D provided under the position of the sealing material 19 shown in Fig. 1.

In Fig. 3, reference 34 is the transparent electrode pattern for driving the liquid crystal on a colour filter. However 34D does not contribute to driving the liquid crystal. It corresponds to the transparent electrode pattern 14D disposed at the position of the sealing material 19 shown in Fig. 1.

In Fig. 4, reference 45 is the transparent electrode pattern for driving the liquid crystal which is at right angles to the transparent electrode pattern 34 of Fig. 3. 45D corresponds to 15D of Fig. 1.

The feature of the present invention is to dispose the transparent electrode patterns 13D, 14D and 15D at the position of the sealing material 19. However, when manufacturing by the dyeing method, the printing method or the pigment distribution method, since these manufacturing methods of colour filter do not require the transparent electrode patterns 13 and 23, the transparent electrode patterns 13D and 23D are unnecessary.

As shown in Fig. 2, the colour filter is formed using high polymer electro-deposition on the transparent electrode pattern (ITO). This electrode pattern is manufactured by the film evaporation and has a film resistance of 20Ω per unit area (20Ω/m²) and a film thickness of 0.1 µm. 23D is formed using the same mask as 23 and at the same time.

The transparent electrode pattern of Fig. 3 is manufactured by film sputtering and has a film resistance of 10Ω/unit area (10Ω/m²) and a film thickness of 0.25 µm. 34 and 34D are also patterned at the same time.

The transparent electrode patterns 45 and 45D of Fig. 2 are manufactured by film sputtering and have a film resistance of 10Ω/unit area (10Ω/m²) and a film thickness of 0.2 µm.

The colour filter substrate and the opposing glass substrate comprise the liquid crystal cell as shown in Fig. 1 with the sealing material 19 which includes a glass fiber having a diameter of 7.5 µm. The cell gap of this liquid crystal cell is 6.9 ± 0.04 µm.

The variation is thus well within the limits required.

### (Embodiment 2)

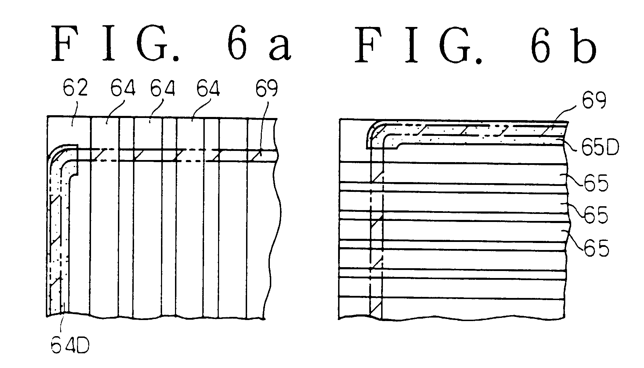

When a liquid crystal cell is manufactured with a dyeing colour filter the transparent electrode 13 and 13D of Fig. 1 is not needed. The transparent electrode pattern on the colour filter is manufactured by film sputtering and has a film resistance of 15Ω/unit area (15Ω/m²) and a film thickness of 0.25 µm. The transparent electrode pattern on the opposing glass substrate 15 and 15D is manufactured by plasma ion film plating and has a film resistance of 10Ω/unit area 10Ω/m² and a film thickness of 0.15 µm. These transparent electrodes are disposed as transparent electrode patterns 64, 64D, 65 and 65D shown in Fig. 6 in the same way as those deposited in the first embodiment.

When the liquid crystal cell shown in Fig. 1 is manufactured using the colour filter substrate and the opposing glass substrate, said substrates having these particular transparent electrode patterns, enable good uniformity of the cell gap, to be obtained and in the order of 7.2 ± 0.05 µm.

### (Comparative Embodiment)

The following are measurements of the cell gap of the liquid crystal cell of the prior art having no transparent electrode pattern at the position of the sealing material 19, corresponding to the same structures as in the embodiments 1 and 2.
(1) The same structure as in embodiment 1$\text{7.0 ± 0.12 µm}$
(2) The same structure as in embodiment 2$\text{7.4 ± 0.14 µm}$

As stated above, the uniformity of the cell gap can be improved by providing a so-called dummy electrode at the position of the sealing material of the liquid crystal cell. The colour liquid crystal display device providing the above liquid crystal cell has uniform colour tone, uniform contrast and good quality of picture.

It should be understood by those skilled in the art that the foregoing description is a preferred embodiment of the disclosed device and that various changes and modifications may be made without departing from the scope of the appended claims.

## Claims

1. A colour electrooptical device comprising:
a colour filter substrate (11) having a colour filter layer (16) and a first transparent electrode pattern (14) over said colour filter layer;
a transparent substrate (12) having a second transparent electrode pattern (15);
said first and second transparent electrode patterns forming pixels;
said two substrates spaced apart and facing each other;
a liquid crystal (20) sealed between said colour filter substrate and said transparent substrate by a seal (19); said colour filter layer not extending between said seal and said colour filter substrate;
said colour filter substrate having a first dummy electrode pattern (14D);
said transparent substrate having a second dummy electrode pattern (15D);
characterized in that
said first dummy electrode pattern is disposed between said seal and said colour filter substrate but not over said colour filter layer,
and said second dummy electrode pattern is disposed between said seal and said transparent substrate.

2. A colour electrooptical device as claimed in claim 1, in which said colour filter substrate further comprises a third transparent electrode pattern (13) and a third dummy electrode pattern (13D) disposed between said seal and said colour filter substrate.

3. A method of manufacturing a colour electrooptical device as claimed in claim 1 comprising:
forming a colour filter substrate (11) having a colour filter layer (16), a first transparent electrode pattern (14) and a first dummy electrode pattern (14D);
forming a transparent substrate (12) having a second transparent electrode pattern (15) and a second dummy electrode pattern (15D);
facing said two substrates spaced apart from each other;
disposing a seal (19) between said two substrates such that said colour filter layer does not extend between said seal and said colour filter substrate,
sealing a liquid crystal (20) between said two substrates with said seal (19);
disposing said first dummy electrode pattern (14D,15D) between said seal and said colour filter substrate but not over said colour filter layer, and disposing said second dummy electrode pattern between said seal and said transparent substrate.

## Patentansprüche

1. Farb-elektrooptische Vorrichtung, umfassend:
ein Farbfiltersubstrat (11) mit einer Farbfilterschicht (16) sowie einem ersten transparenten Elektrodenmuster (14) über der Farbfilterschicht,
ein transparentes Substrat (12) mit einem zweiten transparenten Elektrodenmuster (15);
wobei die ersten und zweiten transparenten Elektrodenmuster Pixel bilden;
wobei die zwei Substrate mit Abstand voneinander angeordnet sind und einander gegenüberliegen;
ein Flüssigkristall (20), das zwischen dem Farbfiltersubstrat und dem transparenten Substrat durch eine Dichtung (19) eingeschlossen ist;
wobei sich die Farbfilterschicht nicht zwischen die Dichtung und das Farbfiltersubstrat erstreckt;
wobei das Farbfiltersubstrat ein erstes Blindelektrodenmuster (14D) aufweist;
wobei das transparente Substrat ein zweites Blindelektrodenmuster (15D) aufweist;
dadurch gekennzeichnet, daß das erste Blindelektrodenmuster zwischen der Dichtung und dem Farbfiltersubstrat, jedoch nicht über der Farbfilterschicht angeordnet ist, und
das zweite Blindelektrodenmuster zwischen der Dichtung und dem transparenten Substrat angeordnet ist.

2. Farb-elektrooptische Vorrichtung nach Anspruch 1, worin das Farbfiltersubstrat ferner ein drittes transparentes Elektrodenmuster (13) sowie ein drittes Blindelektrodenmuster (13D) aufweist, das zwischen der Dichtung und dem Farbfiltersubstrat angeordnet ist.

3. Verfahren zur Herstellung einer farb-elektrooptischen Vorrichtung nach Anspruch 1, umfassend:
Ausbilden eines Farbfiltersubstrats (11) mit einer Farbfilterschicht (16), einem transparenten Elektrodenmuster (14) sowie einem ersten Blindelektrodenmuster (14D);
Ausbilden eines transparenten Substrats (12) mit einem zweiten transparenten Elektrodenmuster (15) sowie einem zweiten Blindelektrodenmuster (15D);
gegenüberliegendes Anordnen der zwei Substrate mit Abstand voneinander;
Anordnen einer Dichtung (19) zwischen den zwei Substraten derart, daß sich die Farbfilterschicht nicht zwischen die Dichtung und das Farbfiltersubstrat erstreckt;
Einschließen von Flüssigkristall (20) zwischen den zwei Substraten mittels der Dichtung (19);
Anordnen des ersten Blindelektrodenmusters (14D, 15D) zwischen der Dichtung und dem Farbfiltersubstrat, jedoch nicht über der Farbfilterschicht, und Anordnen des zweiten Blindelektrodenmusters zwischen der Dichtung und dem transparenten Substrat.

## Revendications

1. Dispositif électro-optique couleur comportant :
un substrat (11) de filtre coloré, ayant une couche (16) de filtre coloré et une première configuration (14) d'électrode transparente sur la couche de filtre coloré ;
un substrat (12) transparent ayant une seconde configuration (15) d'électrode transparente ;
les première et seconde configurations d'électrode transparente formant des pixels ;
les deux substrats étant à distance l'un de l'autre et se faisant face l'un l'autre ;
un cristal (20) liquide scellé entre le substrat de filtre coloré et le substrat transparent par un joint (19) d'étanchéité ; la couche de filtre coloré ne s'étendant pas entre le joint et le substrat de filtre coloré ;
le substrat de filtre coloré ayant une première configuration (14D) de fausse électrode ;
le substrat transparent ayant une seconde configuration (15D) de fausse électrode ;
caractérisé en ce que la première configuration de fausse électrode est disposée entre le joint d'étanchéité et le substrat de filtre coloré, mais pas sur la couche de filtre coloré,
et la seconde configuration de fausse électrode est disposée entre le joint et le substrat transparent.

2. Dispositif électro-optique couleur suivant la revendication 1, dans lequel le substrat de filtre coloré comporte en outre une troisième configuration (13) d'électrode transparente et une troisième configuration (13D) d'électrode fausse disposée entre le joint d'étanchéité et le substrat de filtre coloré.

3. Procédé de fabrication d'un dispositif électro-optique en couleur suivant la revendication 1 comportant:
le fait de former un substrat (11) de filtre coloré ayant une couche (16) de filtre coloré, une première configuration (14) d'électrode transparente et une première configuration (14D) d'électrode fausse ;
le fait de former un substrat (12) transparent ayant une seconde configuration (15) d'électrode transparente et une seconde configuration (15D) de fausse électrode ;
le fait de faire en sorte que les deux substrats se fassent face en étant à distance l'un de l'autre;
le fait de disposer un joint (19) d'étanchéité entre les deux substrats, de sorte que la couche de filtre coloré ne s'étend pas entre le joint d'étanchéité et le substrat de filtre coloré,
le fait de sceller un cristal (20) liquide entre les deux substrats par le joint (19) d'étanchéité ;
le fait de disposer la première configuration (14D) de fausse électrode entre le joint d'étanchéité et le substrat de filtre coloré mais pas sur la couche de filtre coloré,
et le fait de disposer la seconde configuration de fausse électrode entre le joint d'étanchéité et le substrat transparent.
